# FASCICULE DE BREVET EUROPEEN

(11) **EP 1 981 738 B1**
(45) Date de publication et mention de la délivrance du brevet: **06.10.2010**
(21) Numéro de dépôt: 07731597.6
(22) Date de dépôt: 09.02.2007
(51) Int. Cl.: B60R 21/34, B62D 21/16

(54) **SUPPORT D'AILE POUR VEHICULE AUTOMOBILE**
KOTFLÜGELSTÜTZE FÜR EIN KRAFTFAHRZEUG
WING SUPPORT FOR MOTOR VEHICLE

(30) Priorité: 10.02.2006 FR 0650494
(43) Date de publication de la demande: 22.10.2008
(73) Titulaire: Sotira Automotive, 53810 Changé (FR); Renault SAS, 92100 Boulogne Billancourt (FR)
(72) Inventeur: FEUILLADE, Vincent, F-18100 Vierzon (FR); POULIN,Rémi, F-18100 Saint Hilaire de Court (FR); TETU, Yvon, F-92250 La Garenne Colombes (FR); ZANOLIN, Dominique, F-78150 Le Chesnay (FR)
(74) Mandataire: Religieux, Vincent
(86) Numéro de dépôt international: PCT/FR2007/050772
(87) Numéro de publication internationale: WO 2007/090997

(56) Documents cités:
- FR-A- 2 870 497

## Description

### Domaine de l'invention

La présente invention se rapporte au domaine automobile et elle concerne plus particulièrement un support d'aile de véhicule automobile.

### Art antérieur

On connaît des dispositifs destinés à assurer le support des ailes avant d'un véhicule automobile. La plupart de ces dispositifs sont constitués par des structures linéaires de grande dimension dont la partie inférieure est fixée sur une partie rigide du châssis du véhicule et la partie supérieure est munie de fixations pour retenir l'aile. Toutefois, la demande JP2003/118639 montre une structure pouvant être formée de plusieurs supports individuels chacun constitué d'une plaque sensiblement en forme de V dont la face supérieure comporte une fixation d'aile et les faces inférieures avant et arrière sont fixées au châssis du véhicule.

Ces supports individuels ont l'avantage d'être relativement légers par rapport aux structures linéaires. Toutefois, ils présentent encore certains inconvénients et limitations. En particulier, la tenue de chaque support individuel n'est pas homogène dans toutes les directions et sa capacité en matière d'absorption d'efforts est limitée.

La publication FR-A-2 870 497 divulgue un support d'aile d'après le préambule de la revendication 1.

### Objet et définition de l'invention

La présente invention a donc pour objet un support d'aile pour véhicule automobile qui pallie les inconvénients précités et comporte une partie supérieure munie de moyens de fixation à une aile de véhicule automobile et une partie inférieure munie de moyens de fixation à une partie de structure du véhicule automobile, ladite partie supérieure étant reliée à ladite partie inférieure par deux montants transversaux parallèles qui prolongent de part et d'autre ladite partie supérieure et, par une première partie inférieure de raccord courbe descendent pour rejoindre deux ailes horizontales transversales qui à leur tour, par une seconde partie inférieure de raccord courbe, rejoignent deux rebords verticaux transversaux portés par ladite partie inférieure dont deux zones, prolongeant perpendiculairement lesdits deux rebords verticaux transversaux se rejoignent en s'étendant transversalement.

Ainsi, ce support d'aile en forme de pontet peut résister aux sollicitations tant verticales que transversales.

Avantageusement, ladite partie inférieure comporte des moyens de rigidification longitudinale.

Lesdits moyens de rigidification longitudinale peuvent comporter un bord longitudinal porté par ladite partie inférieure et prolongeant lesdits deux rebords verticaux transversaux.

De préférence, lesdites première et seconde parties de raccord courbe comportent des zones de plus forte épaisseur pour rigidifier ledit support d'aile.

Ainsi, sa capacité d'absorption des chocs est fortement augmentée tout en étant parfaitement contrôlée.

Le support d'aile peut comporter en outre une paroi longitudinale verticale perpendiculaire à ladite partie supérieure et reliant entre eux sur au moins une partie de leur hauteur lesdits montants verticaux transversaux.

Ainsi, il est possible d'avoir un mode de fixation en Y et/ou en Z.

Avantageusement, ladite partie inférieure est de forme sensiblement triangulaire avec une zone s'étendant transversalement à ladite partie supérieure.

Le support d'aile qui peut comporter en outre un système de nervures disposé en dessous de ladite partie inférieure est avantageusement formé d'une seule pièce en matériau élasto visto plastique.

### Brève description des dessins

Les caractéristiques et avantages de la présente invention ressortiront mieux de la description suivante, faite à titre indicatif et non limitatif, en regard des dessins annexés sur lesquels :
- la figure 1 montre schématiquement un détail d'une partie avant d'un véhicule automobile,
- les figures 2 et 3 montrent un premier exemple de réalisation d'un support d'aile selon l'invention,
- la figure 4 illustre le support d'aile des figures 2 et 3 après rupture,
- les figures 5 et 6 montrent un deuxième exemple de réalisation d'un support d'aile selon l'invention, et
- la figure 7 illustre une autre variante de réalisation.

### Description détaillée d'un mode de réalisation préférentiel

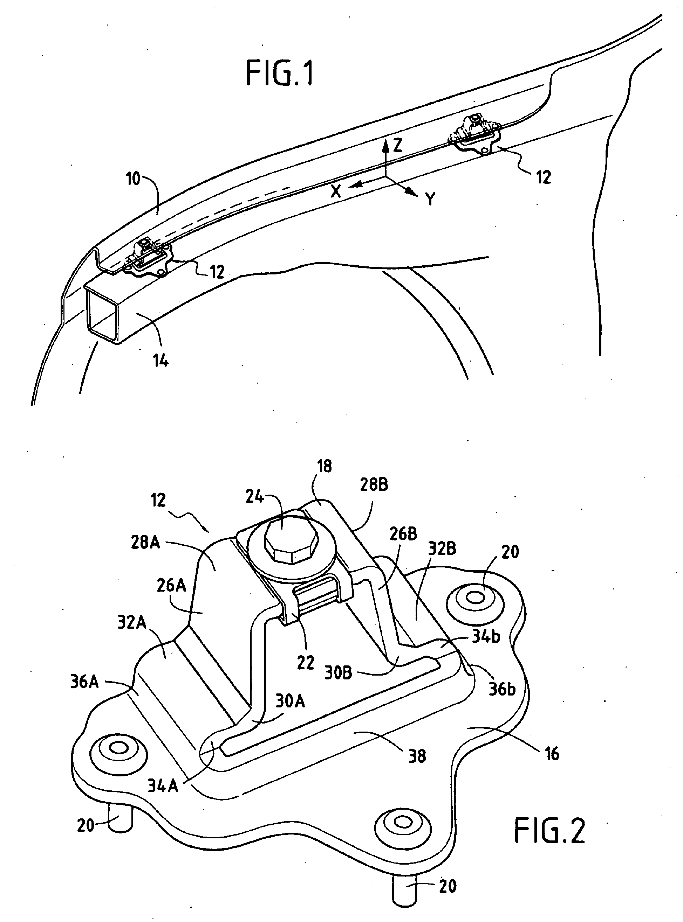

La figure 1 est une vue interne de la partie avant d'un véhicule automobile comportant une aile 10 fixée sur deux supports d'aile 12 selon l'invention fixés eux-mêmes chacun sur une même partie rigide de châssis du véhicule automobile, par exemple un longeron 14.

Ces supports d'aile qui présentent une forme générale en pont ont l'avantage de remplir chacun trois fonctions différentes avec uniquement une seule pièce. Ces fonctions sont les suivantes :
- raideur (application d'un effort donné au droit des fixations d'ailes suivant les directions Y et Z dans les 2 sens) pour assurer une déformation minimale,
- robustesse (application d'un effort donné au droit des fixations d'ailes suivant les directions Y et Z dans les 2 sens) pour éviter toute rupture ou amorce de rupture lors de l'application de l'effort au droit de la fixation d'aile et au sommet du support,
- résistance au choc piéton (puits de chute d'une masse donnée à une hauteur donnée correspondant à une énergie dite impactante) au droit des fixations d'aile pour éviter la section du support sous une énergie impactante faible, par rapport à la normale et à un angle de 50°, et limiter la course de la masse impactante à une faible valeur après rupture.

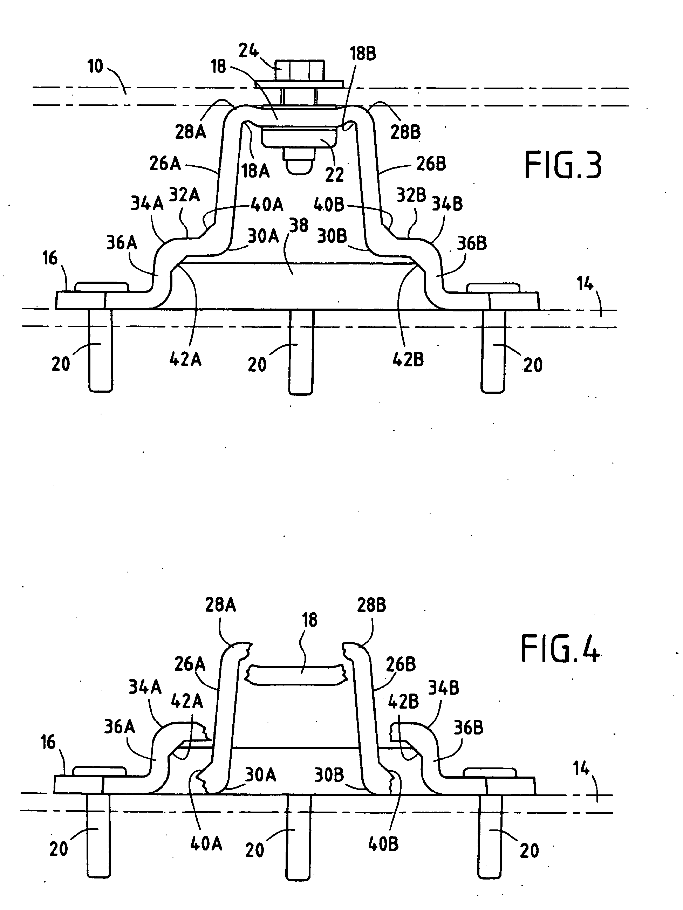

Un premier exemple de ce support d'aile est illustré aux figures 2 et 3.

Ce support 12, qui sera appelé pontet dans le reste de la description, est une pièce monolithique réalisée par moulage dans un matériau élasto visco plastique endommageable et fixée d'une part par sa partie inférieure ou platine 16 sur la pièce rigide 14 du châssis de véhicule et d'autre part par sa partie supérieure horizontale ou plateforme 18 sur le bord de l'aile 10. La partie inférieure rigide de forme sensiblement triangulaire (c'est-à-dire s'étendant transversalement à la plateforme) est prévue pour la fixation à la structure du châssis du véhicule avec un ou plusieurs rivets, par exemple 3 rivets pops 20. La partie supérieure est fixée à l'aile dans le sens horizontal par des moyens de fixation, par exemple une agrafe de fixation 22 maintenue par un écrou 24.

La liaison entre la partie supérieure du pontet et sa partie inférieure est assurée par deux montants verticaux parallèles 26A, 26B dont les extrémités supérieures prolongent de part et d'autre la plateforme 18 par des parties supérieures de raccord courbe 28A, 28B et dont les extrémités inférieures rejoignent par une première partie inférieure de raccord courbe 30A, 30B deux ailes horizontales transversales 32A, 32B qui à leur tour viennent rejoindre par une seconde partie inférieure de raccord courbe 34A, 34B deux rebords verticaux transversaux 36A, 36B portés par la platine 16. Ces deux rebords verticaux se prolongent et se rejoignent par un bord longitudinal 38 porté également par la platine qui permet de rigidifier le pontet lors de sollicitations dirigées selon les directions transversales + et - Y. Ce bord longitudinal qui forme la continuité des rebords verticaux sert aussi à renforcer la platine 16 du pontet lors de chocs dirigés selon les directions verticales + et - Z lorsque le pontet est monté sur le longeron du véhicule 14. La rigidité du pontet lors de chocs dirigés selon les directions verticales + et - Z est aussi assurée par la présence des montants verticaux transversaux 28A, 28B disposés de part et d'autre du pontet.

La cinématique de chaque pontet illustrée par la figure 4 est bien entendu calculée de telle sorte qu'elle permette la descente de l'aile sans impacter celle du capot ou d'un élément environnant impacté par la zone de frappe piéton (projecteur, charnières de capot, etc.). Ainsi, les parties inférieures de raccord courbe comprennent aussi des zones de chanfrein de plus forte épaisseur 40A, 40B ; 42A, 42B qui permettent de rigidifier la pièce pour des efforts en Y et Z. Elles permettent aussi de remplir la fonction de résistance au choc piéton en optimisant la rupture du pontet pour une énergie déterminée. En effet, soumis à choc piéton, le pontet doit descendre ou s'écraser pour permettre l'absorption d'énergie provoquée par le choc avant de céder successivement au niveau des ailes horizontales 32A, 32B reliant ces zones de chanfrein puis au niveau de zones de fragilisation 18a, 18B de la plateforme 18 assurant la jonction avec les parties supérieures de raccord courbe 28A, 28B.

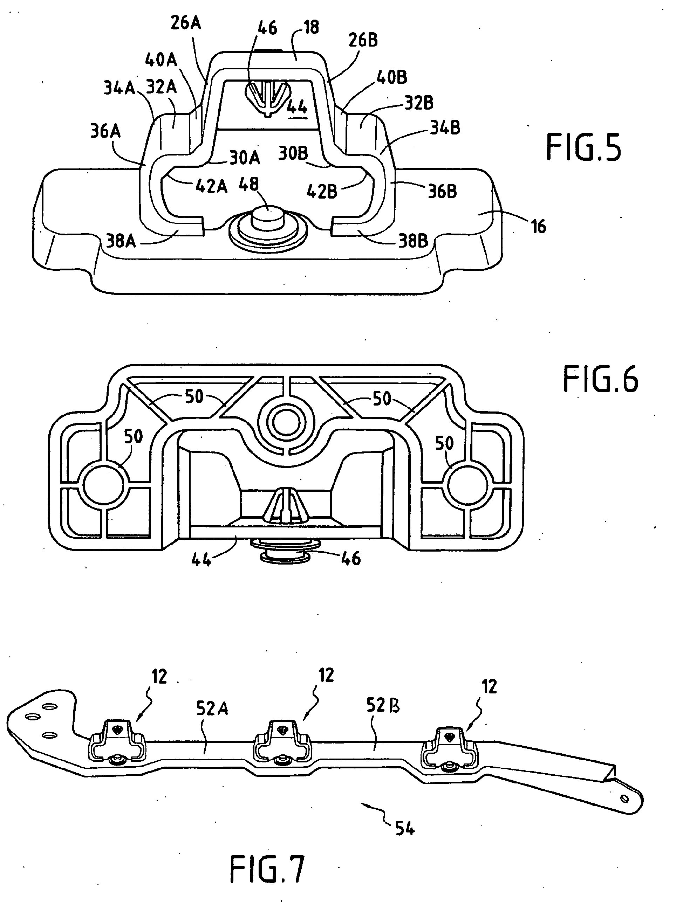

Un deuxième exemple du support d'aile selon l'invention plus particulièrement adapté à une aile plastique est maintenant illustré aux figures 5 et 6.

Le support d'aile comporte essentiellement les mêmes éléments qui comportent donc les mêmes références. Toutefois, la fixation de l'aile s'effectuant avec cette variante dans le sens vertical, le pontet comporte en plus une paroi longitudinale verticale 44 perpendiculaire à la plateforme 18, reliant entre eux sur au moins une partie de leur hauteur les montants verticaux parallèles 26A, 26B et destinée à recevoir une vis de fixation 46 en lieu et place de l'ensemble agrafe/écrou. De même, la fixation à la structure 14 du châssis du véhicule est effectuée par un ou plusieurs rivets et de préférence par un seul rivet central 48. Comme précédemment, la partie inférieure ou platine 16 porte un rebord longitudinal qui, dans cette variante et du fait de la position du rivet 48, est en deux parties 38A, 38B et permet de rigidifier le pontet lors de sollicitations dirigées selon les directions + et - Y et d'en renforcer sa base. De plus, un système de nervures 50 disposé en dessous de la partie inférieure du pontet permet de rigidifier et d'obtenir un montage en x favorable sur la chaîne de fabrication.

La figure 7 illustre une variante de réalisation dans laquelle les pontets d'une même aile sont reliés entre eux par des bretelles de jonction 52A, 52B formant ainsi une pièce unique 54 qui peut être fixée sur une partie de structure du véhicule. On notera que le nombre de pontets n'est bien entendu pas limité à trois et dépend de la structure du véhicule.

L'utilisation de pontets indépendants, comme le montre la figure 1, c'est à dire non reliés entre eux ou fixés directement à la structure du véhicule, rend possible le remplacement d'un seul pontet au contraire de la structure de la figure 7.

En outre, de part la conception de ce pontet, il est possible d'ajuster la hauteur des montants verticaux 26A, 26B ainsi que des zones de chanfrein 40A, 40B et 42A, 42B en fonction de la définition de l'environnement du véhicule et donc d'adapter ce type de pièce à un véhicule donné.

## Revendications

1. Support d'aile de véhicule automobile comportant une partie supérieure (18) munie de moyens de fixation (22, 24; 46) à une aile (10) de véhicule automobile et une partie inférieure (16) munie de moyens de fixation (20; 48) à une partie de structure (14) du véhicule automobile, ladite partie supérieure étant reliée à ladite partie inférieure par deux montants transversaux parallèles (26A, 26B) qui prolongent de part et d'autre ladite partie supérieure **caractérisé en ce que** les montants transversaux parallèles descendent par une première partie inférieure de raccord courbe (30A, 30B) pour rejoindre deux ailes horizontales transversales (32A, 32B) qui à leur tour, par une seconde partie inférieure de raccord courbe (34A, 34B), rejoignent deux rebords verticaux transversaux (36A, 36B) portés par ladite partie inférieure (16) dont deux zones prolongeant perpendiculairement lesdits deux rebords verticaux transversaux (36A, 36B) qui se rejoignent en s'étendant transversalement.

2. Support d'aile selon la revendication 1, **caractérisé en ce que** lesdites première et seconde parties inférieures de raccord courbe comportent des zones de plus forte épaisseur (40A, 40B ; 42A, 42B) pour rigidifier ledit support d'aile.

3. Support d'aile selon la revendication 1, **caractérisé en ce que** ladite partie inférieure comporte des moyens de rigidification longitudinale (38).

4. Support d'aile selon la revendication 3, **caractérisé en ce que** lesdits moyens de rigidification longitudinale comportent un bord longitudinal (38) porté par ladite partie inférieure et prolongeant lesdits deux rebords verticaux transversaux.

5. Support d'aile selon la revendication 4, **caractérisé en ce que** ledit bord longitudinal est réalisé en deux parties (38A, 38B) portées par ladite partie inférieure et prolongeant chacune longitudinalement un rebord vertical transversal.

6. Support d'aile selon la revendication 1 ou la revendication 4, **caractérisé en ce qu'**il comporte en outre une paroi longitudinale verticale (44) perpendiculaire à ladite partie supérieure et reliant entre eux sur au moins une partie de leur hauteur lesdits montants verticaux transversaux.

7. Support d'aile selon la revendication 1 ou la revendication 4, **caractérisé en ce que** ladite partie inférieure est de forme sensiblement triangulaire avec une zone s'étendant transversalement à ladite partie supérieure.

8. Support d'aile selon la revendication 1 ou la revendication 4, **caractérisé en ce qu'**il comporte en outre un système de nervures (50) disposé en dessous de ladite partie inférieure.

9. Support d'aile selon l'une quelconque des revendications 1 à 8, **caractérisé en ce qu'**il est formé en un matériau élasto visco plastique.

## Claims

1. Motor vehicle wing support comprising an upper portion (18) furnished with means (22, 24; 46) for attachment to a wing (10) of a motor vehicle and a lower portion (16) furnished with means (20; 48) for attachment to a structural portion (14) of the motor vehicle, said upper portion being connected to said lower portion by two transverse parallel uprights (26A, 26B) which extend said upper portion on either side, **characterized in that** the transverse parallel uprights descend by a first lower curved connecting portion (30A, 30B) to join two transverse horizontal flanges (32A, 32B) which in their turn, by a second lower curved connecting portion (34A, 39B), join two transverse vertical edges (36A, 36B) supported by said lower portion (16) of which two zones perpendicularly extending said two transverse vertical edges (36A, 36B) which join together while extending transversely.

2. Wing support according to Claim 1, **characterized in that** said first and second lower curved connecting portions comprise thicker zones (40A, 40B; 42A, 42B) in order to stiffen said wing support.

3. Wing support according to Claim 1, **characterized in that** said lower portion comprises means (38) for longitudinal stiffening.

4. Wing support according to Claim 3, **characterized in that** said longitudinal stiffening means comprise a longitudinal edge (38) supported by said lower portion and extending said two transverse vertical edges.

5. Wing support according to Claim 4, **characterized in that** said longitudinal edge is made in two portions (38A, 38B) supported by said lower portion and each longitudinally extending a transverse vertical edge.

6. Wing support according to Claim 1 or Claim 4, **characterized in that** it also comprises a vertical longitudinal wall (44) perpendicular to said upper portion and connecting together said transverse vertical uprights over at least one portion of their height.

7. Wing support according to Claim 1 or Claim 4, **characterized in that** said lower portion is of substantially triangular shape with a zone extending transversely to said upper portion.

8. Wing support according to Claim 1 or Claim 4, **characterized in that** it also comprises a system of ribs (50) placed beneath said lower portion.

9. Wing support according to any one of Claims 1 to 8, **characterized in that** it is formed of an elastovisco plastic material.

## Patentansprüche

1. Kotflügelstütze für Kraftfahrzeug, die einen oberen Teil (18), der mit MiLteln (22, 24; 46) für die Befestigung an einem Kotflügel (10) des Kraftfahrzeugs versehen ist, und einen unteren Teil (16), der mit Mitteln (20; 48) für die Befestigung an einem Strukturteil (14) des Kraftfahrzeugs versehen ist, enthält, wobei der obere Teil mit den unteren Teil durch zwei parallele transversale Streben (26A, 26B) verbunden ist, die sich beiderseits des oberen Teils erstrecken, **dadurch gekennzeichnet, dass** die parallelen transversalen Streben durch einen ersten unteren gekrümmten Verbindungsteil (30A, 30B) nach unten verlaufen, um in zwei transversale horizontale Flügel (32A, 32B) überzugehen, die ihrerseits durch einen zweiten unteren gekrümmten Verbindungsteil (34A, 34B) in zwei transversale vertikale Kanten (36A, 36B) übergehen, die durch den unteren Teil (16) getragen werden, wovon zwei Zonen, die die zwei transversalen vertikalen Kanten (36A, 36B) senkrecht erstrecken, welche ineinander übergehen, indem sie sich transversal erstrecken.

2. Kotflügelstüze nach Anspruch 1, **dadurch gekennzeichnet, dass** der erste und der zweite untere gekrümmte Verbindungsteil Zonen mit größerer Dicke (40A, 40B; 42A, 42B) aufweisen, um die Kotflügelstütze zu versteifen.

3. Kotflügelstütze nach Anspruch 1, **dadurch gekennzeichet, dass** der untere Teil longitudinale Versteifungsmittel (38) aufweist.

4. Kotflügelstütze nach Anspruch 3, **dadurch gekennzeichnet, dass** die longitudinalen Versteifungsmittel einen longitudinalen Rand (38) aufweisen, der von dem unteren Teil getragen wird und die zwei transversalen vertikalen Kanten verlängert.

5. Kotflügelstütze nach Anspruch 4, **dadurch gekennzeichnet, dass** der longitudinale Rand aus zwei Teilen (38A, 38B) verwirklicht ist, die von dem unteren Teil getragen werden und jeweils longiLudinal eine transversale vertikale Kante verlängern.

6. Kotflügelstütze nach Anspruch 1 oder Anspruch 4, **dadurch gekennzeichnet, dass** sie außerdem eine vertikale longitudinale Wand (44) senkrecht zu dem oberen Teil aufweist, die die transversalen vertikalen Streben wenigstens auf einen Teil ihrer Höhe miteinander verbindet.

7. Kotflügelstütze nach Anspruch 1 oder Anspruch 4, **dadurch gekennzeichnet, dass** der untere Teil eine im Wesentlichen dreieckige Form hat, wobei sich eine Zone transversal zu dem oberen Teil erstreckt.

8. Kotflügelstütze nach Anspruch 1 der Anspruch 4, **dadurch gekennzeichnet, dass** sie außerdem ein Rippensystem (50) aufweist, das unter dem unteren Teil angeordnet ist.

9. Kotflügelstütze nach einem der Ansprüche 1 bis 8, **dadurch gekennzeichnet, dass** sie aus einem viskoelastischen Kunststoff gebildet ist.
